# EUROPÄISCHE PATENTANMELDUNG

(11) **EP 2 249 122 A1**
(43) Veröffentlichungstag der Anmeldung: **10.11.2010**
(21) Anmeldenummer: 10002149.2
(22) Anmeldetag: 03.03.2010
(51) Int. Cl.: G01B 11/25

(54) **Verfahren zur Erfassung von Bauteilen in Oberleitungsanlagen von Schienenfahrzeugen, insbesondere von Eisenbahnfahrzeugen**

(30) Priorität: 27.04.2009 DE 102009018763
(71) Anmelder: DB Netz AG, 60486 Frankfurt am Main (DE)
(72) Erfinder: Pohl, Peter, 58239 Schwerte (DE)
(74) Vertreter: Zinken-Sommer, Rainer

(57) **Zusammenfassung**

Die Erfindung betrifft ein Verfahren zur Erfassung von Stützpunkten und dem Kettenwerk von Oberleitungsanlagen elektrischer Eisenbahnen, mit einem auf dem Dach des Wagenkastens eines auf Schienen verfahrbaren Messfahrzeuges installierten Messgehäuse mit einem oder mehreren Lasern und Kameras, die im Lichtschnittverfahren die Position der Bauteile über dem Dach des Messfahrzeuges und in Bezug zu Bauwerken und Tunneln, sowie die Neigung der Stützrohre und der Seitenhalter ermittelt.

Der Erfindung liegt daher die Aufgabe zugrunde, ein Verfahren zur Erfassung von Annäherungen von Teilen der Oberleitungsanlagen und Stromabnehmer elektrischer Eisenbahnen zu Bauwerken und Tunneln bereitzustellen, welche eine im Vergleich zum bekannten Stand der Technik zuverlässigere Detektion der relevanten Ereignisse gewährleistet.

Erfindungsgemäß wird diese Aufgabe durch den Inhalt des Patentanspruches 1 gelöst. Dabei ist auf dem Dach eines Schienenfahrzeuges mindestens ein Laser mit einer Strahlformungsoptik (Linienoptik wie Zylinderlinse, Powell-Linse) und mindestens ein flächenhafter, ortsauflösender Sensor (z.B. CCD-Sensor in Videokameras) zum Einsatz kommt. Die Laserlinie(n) ist (sind) dabei quer zur Fahrtrichtung des Schienenfahrzeuges orientiert. Der (die) Sensor(en) sind so angeordnet, dass auf Ihnen mit Hilfe einer Abbildungsoptik ein Bild der Teile der Oberleitungsanlage, die von der Laserlinie (den Laserlinien) ausgeleuchtet werden. Zur Verbesserung der Nutzinformation können enge Spektralfilter (Transmissionsmaximum bei der Laserwellenlänge) vor der Abbildungsoptik eingesetzt werden, die den Einfluss von Fremdbeleuchtung auf die detektierte Szene reduzieren. Die Erfindung umfasst auch zeitlich gemultiplexte Einschaltsequenzen der Laser beim Einsatz von mehreren Lasern. Ebenfalls umfasst die Erfindung den Einsatz von Umlenkelementen (wie Spiegeln oder Prismen), die es erlauben, den vom Licht zurückgelegten Weg zwischen dem Laser (den Lasern) und den Auftreffpunkten an den Teilen der Oberleitung zu verändern. Die Ausgangssignale einer auf dem Lichtschnittverfahren beruhenden Einrichtung werden in einer Auswertungs- und Steuerungseinrichtung zusammengeführt und verarbeitet. Damit stehen nach der Auswertung die Abstandsmesswerte von, im Messbereich der Einrichtung befindlichen, Objekten oberhalb des Fahrzeugdaches relativ zum Fahrzeugdach zur Verfügung. Durch synchrone Aufzeichnung von Messwerten (z.B. Neigungssensoren) kann die Orientierung des Fahrzeugdaches ermittelt werden und die berechneten Abstandswerte auf ein anderes Bezugssystem umgerechnet werden.

Während das Lichtschnittverfahren das Kettenwerk und die damit verbundenen Bauteile einerseits und die Bauwerke und Tunnel andererseits auf Höhe des Stromabnehmers erfasst, wird das Profil des Stromabnehmers abhängig von der Fahrdrahthöhe virtuell eingerechnet. Der Abstand von den Bauteilen des Kettenwerkes oder dem virtuell ergänzten Stromabnehmer wird während der Messfahrt permanent gemessen, bzw. errechnet. Wird der zulässige Abstand unterschritten, wird dieses Ereignis ortsgenau angezeigt und aufgezeichnet. Die Verortung kann mittels Odometer und/oder dGPS durchgeführt werden.

## Beschreibung

Die Erfindung betrifft ein Verfahren zur Erfassung von Stützpunkten und dem Kettenwerk von Oberleitungsanlagen elektrischer Eisenbahnen, mit einem auf dem Dach des Wagenkastens eines auf Schienen verfahrbaren Messfahrzeuges installierten Messgehäuse mit einem oder mehreren Lasern und Kameras, die im Lichtschnittverfahren die Position der Bauteile über dem Dach des Messfahrzeuges und deren Abstand zu Bauwerken und Tunneln , sowie die Neigung der Stützrohre und der Seitenhalter ermittelt. Mit dem Stromabnehmer wird der kraftabhängige Anhub erzeugt. Der Abstand des Kettenwerkes, der Bauteile und des virtuellen Stromabnehmers zu den gleichzeitig ermittelten Bauwerken und Tunneln wird fortlaufend ermittelt. Kritische Stellen werden ortsgenau, d.h. mit Angabe des Streckenkilometers und/oder der GPS-Position ausgewiesen. Der Abstand der unter Spannung stehenden Teile der Oberleitung zu Bauwerken und Tunneln, sowie die Neigung der Seitenhalter und Stützrohre, die als kritisch ausgewiesen werden, kann beliebig eingestellt werden.

Beim Betrieb elektrischer Bahnen, welche mittels Oberleitungsanlagen mit Strom versorgt werden, ist dem Zusammenwirken zwischen dem Stromabnehmer des Schienenfahrzeuges und dem Kettenwerk der Oberleitung stets ein besonderes Augenmerk zu widmen. Dies gilt insbesondere, wenn die Schienenfahrzeuge mit höheren Geschwindigkeiten verkehren sollen und somit hohe dynamische Lasten auf den Kontaktbereich zwischen Stromabnehmer und Fahrdraht einwirken. Es hat sich deshalb in der Praxis ein einschlägiges Regelwerk herausgebildet, welches in regelmäßigen Abständen wiederkehrende Funktionsprüfungen vorsieht. Unter anderem ist hierbei zu überprüfen, ob es zu unzulässigen Annäherungen von unter Hochspannung stehenden (aktiven) Teilen zu Bauwerken und Tunneln kommt. Diese können beispielsweise von veränderten Gleislagen oder temperaturbedingten Lageänderungen von Kettenwerk und mit diesem in Verbindung stehenden Bauteilen herrühren. Solche Annäherungen bedeuten eine Gefahr für Menschen und Anlagen.

Es ist in der Praxis bislang üblich, Stellen, an denen eine grenzwertige Annäherung der aktiven Teile zu Bauwerken und Tunneln eingetreten ist, bei den Begehungen (Zustandsprüfung Z1) zu ermitteln. Die so ermittelten Stellen werden mit einem Instandhaltungsfahrzeug angefahren, die Oberleitung wird ausgeschaltet und bahngeerdet. Der Abstand des ausgeschalteten und bahngeerdeten Oberleitungskettenwerkes zu Bauteilen und Tunneln wird vom Dach oder der Arbeitsbühne des Instandhaltungsfahrzeuges aus gemessen. Mit einer Federwaage wird der Fahrdraht angehoben und so die (Prüf-) Anpresskraft simuliert.
In der Praxis hat es sich erwiesen, dass nicht alle kritische Stellen erkannt werden. In Tunneln ist wegen der herrschenden Dunkelheit das Erkennen einer kritischen Stelle nur sehr schlecht möglich. Gefahren bleiben unerkannt. Das Prüfergebnis kann durch sichtbedingte Beurteilungsschwankungen beeinflusst werden. Im Extremfall kann dies dazu führen, dass nicht alle kritischen Stellen erfasst werden.
Manche Stellen werden als kritisch eingestuft, die bei der Messung als unkritisch erkannt werden. Der Aufwand für Prüfung dieser ungefährlichen Stellen ist aber erheblich. Es müssen auch in diesen Fällen Betriebanweisungen und Fahrplananordnungen erstellt werden. Während der Prüfung ist der ausgeschaltete Teil eines Bahnhofs oder die Freie Strecke für den Regelverkehr gesperrt, evtl. müssen Umleitungen eingerichtet werden. Bei der Prüfung solcher fehleingeschätzter Stellen wird ein unnötiger Aufwand getrieben.

Bekannt ist ein abtastender Scanner für einen Entfernungsmesser mit Laserdioden als Hinderniswarngerät, vorzugsweise für fahrerlose Transportsysteme, dessen optischelektronisch abtastende Entfernungsmessung eine wesentlich erhöhte Sicherheit gewährleistet (DE 42 22 659 A1).

Aus der DE 10 2004 033 928 B4 ist eine Abtastvorrichtung zum Vermessen der Konturen eines Objektes bekannt, wobei ein erster und ein zweiter Laserlichtstrahl zur Erzeugung eines Abtaststrahlenpaares aus entgegengesetzten Richtungen auf die Seiten eines zweiseitig reflektierenden Körpers einer Ablenkeinheit treffen.

Die DE 44 45 465 A1 beschreibt eine Abtastvorrichtung zur Vermessung des freien, passierbaren Raumes über Verkehrswegen, wobei diese Vorrichtung in einem Schienenfahrzeug untergebracht, das beispielsweise durch einen Tunnel hindurch fährt. Die Abtastvorrichtung erzeugt mit Hilfe eines Lasers sowie einer rotierenden Ablenkvorrichtung einen in einer Ebene quer zur Fahrtrichtung verlaufenden rotierenden Sendestrahl. Infolge dessen tastet der Sendestrahl die Wand des Tunnels mit einer schraubenlinienförmigen flächendeckenden Abtastlinie ab. Das von der Wand zurückgeworfenen Licht wird von der Ablenkvorrichtung empfangen und einem Detektor zugeführt. Da die Intensität des Sendestrahles moduliert ist, ist durch eine Messung der Phasenverschiebung der Modulationsphase des Sendestrahles gegenüber der Modulationsphase eines Empfangsstrahles die Entfernung der Wand des Tunnels von der Ablenkvorrichtung bestimmbar.
Allen bekannten Verfahren und Vorrichtungen ist gemeinsam, dass es mit ihnen nicht möglich ist, eine zuverlässige Detektion der relevanten Ergebnisse in derart zu erreichen, dass Gefahrenstellen im Lichtraumprofil schnell, sicher und mit einem vertretbaren Aufwand ortsbezogen beseitigt werden können.

Der Erfindung liegt daher die Aufgabe zugrunde, ein Verfahren zur Erfassung von Annäherungen von Teilen der Oberleitungsanlagen und Stromabnehmer elektrischer Eisenbahnen zu Bauwerken und Tunneln bereitzustellen, welche eine im Vergleich zum bekannten Stand der Technik zuverlässigere Detektion der relevanten Ereignisse gewährleistet.

Erfindungsgemäß wird diese Aufgabe durch den Inhalt des Patentanspruches 1 gelöst. Dabei ist auf dem Dach eines Schienenfahrzeuges mindestens ein Laser mit einer Strahlformungsoptik (Linienoptik wie Zylinderlinse, Powell-Linse) und mindestens ein flächenhafter, ortsauflösender Sensor (z.B. CCD-Sensor in Videokameras) zum Einsatz kommt. Die Laserlinie(n) ist (sind) dabei quer zur Fahrtrichtung des Schienenfahrzeuges orientiert. Der (die) Sensor(en) sind so angeordnet, dass auf Ihnen mit Hilfe einer Abbildungsoptik ein Bild der Teile der Oberleitungsanlage, die von der Laserlinie (den Laserlinien) ausgeleuchtet werden. Zur Verbesserung der Nutzinformation können enge Spektralfilter (Transmissionsmaximum bei der Laserwellenlänge) vor der Abbildungsoptik eingesetzt werden, die den Einfluss von Fremdbeleuchtung auf die detektierte Szene reduzieren. Die Erfindung umfasst auch zeitlich gemultiplexte Einschaltsequenzen der Laser beim Einsatz von mehreren Lasern. Ebenfalls umfasst die Erfindung den Einsatz von Umlenkelementen (wie Spiegeln oder Prismen), die es erlauben, den vom Licht zurückgelegten Weg zwischen dem Laser (den Lasern) und den Auftreffpunkten an den Teilen der Oberleitung zu verändern. Die Ausgangssignale einer auf dem Lichtschnittverfahren beruhenden Einrichtung werden in einer Auswertungs- und Steuerungseinrichtung zusammengeführt und verarbeitet. Damit stehen nach der Auswertung die Abstandsmesswerte und die Neigung von, im Messbereich der Einrichtung befindlichen, Objekten oberhalb des Fahrzeugdaches relativ zum Fahrzeugdach und zu Bauwerken, sowie zur Tunnellaibung zur Verfügung. Durch synchrone Aufzeichnung von Messwerten (z.B. Neigungssensoren) kann die Orientierung des Fahrzeugdaches ermittelt und die berechneten Abstandswerte auf ein anderes Bezugssystem umgerechnet werden.

Während das Lichtschnittverfahren das Kettenwerk und die damit verbundenen Bauteile einerseits und die Bauwerke und Tunnel andererseits auf Höhe des Stromabnehmers erfasst, wird das Profil des Stromabnehmers abhängig von der Fahrdrahthöhe virtuell eingerechnet. Der Abstand von den Bauteilen des Kettenwerkes oder dem virtuell ergänzten Stromabnehmer wird während der Messfahrt permanent gemessen, bzw. errechnet. Wird der zulässige Abstand unterschritten, und/oder stehen Stützrohre oder Seitenhalter in einem unzulässigen Winkel zur Schleifleiste des Stromabnehmers, wird dieses Ereignis ortsgenau angezeigt und aufgezeichnet. Die Verortung kann mittels Odometer und/oder dGPS durchgeführt werden.

Eine Variante der erfinderischen Lösung sieht auf dem Dach und/oder auf dem Führerstand des Instandhaltungsfahrzeuges eine Kamera zur optischen Erfassung der Annäherungszone zwischen den aktiven Teilen und den Bauwerken und Tunneln vor, die von der Steuerungsvorrichtung in Abhängigkeit vom Ergebnis zur Aufnahme von Kontrollbildern ein- bzw. abgeschaltet wird. Auf diese Weise können messtechnisch erfasste Ereignisse in dieser Zone dokumentiert und einer Auswertung zugänglich gemacht werden.

### Vorteile der Erfindung

- durch das Verfahren können Bauteile in Oberleitungsanlagen, wie Stützrohre und Seitenhalter sowie deren Neigung und der Abstand der Teile zu Bauwerken und Tunnel sicher, ortsbezogen und schnell erkannt werden
- Begehungen vor Ort sind nicht mehr notwendig
- es werden auch kritische Stellen (Dunkelheit im Tunnel) zu jeder Zeit (Nacht) zuverlässig erkannt
- der Prüfungsaufwand pro Strecke sinkt erheblich
- das Unfallrisiko kann minimiert werden
- anhand der Bildaufzeichnungen mehrer Prüfungen kann die Entwicklung einer als kritisch eigeschätzten Stelle verfolgt werden.
- Anhand der Videoaufzeichnungen kann geprüft werden, ob die veranlassten Instandhaltungsmaßnahmen geeignet sind, den kritischen, evtl. lebensgefährlichen Zustand zu beheben.

### Ausführungsbeispiel

Nachfolgend soll anhand eines Ausführungsbeispieles die Erfindung näher erläutert werde.

Dabei zeigen:

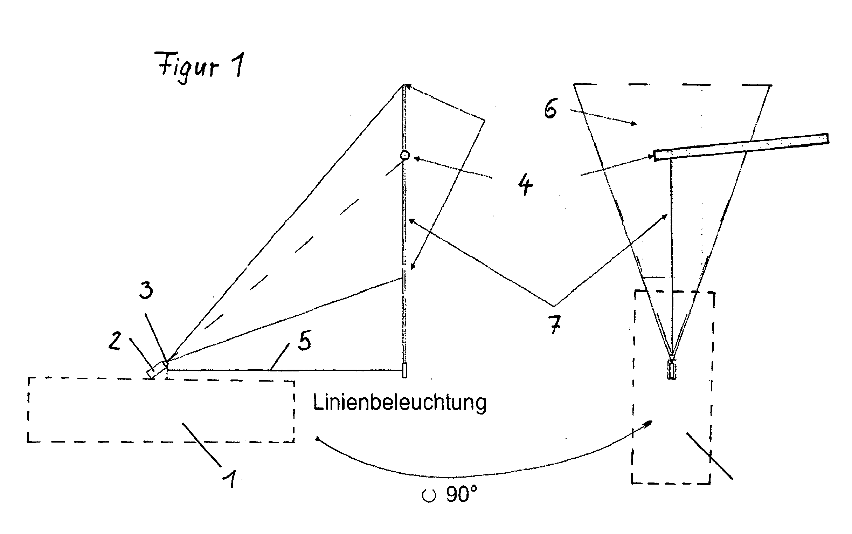

- Figur 1 - eine schematische Anordnung der Vorrichtung auf dem Dach eines Schienenfahrzeuges

Für die Messung kommt ein Schienenfahrzeug zum Einsatz, welches über einen Wagenkasten (1) verfügt, auf dessen Dach ein Stromabnehmer (2) montiert ist, der an den Fahrdraht einer Oberleitungsanlage angelegt werden kann. Die Anpresskraft kann aus dem Fahrzeuginnern vorgegeben werden. Dieser Stromabnehmer (2) dient nicht der Aufnahme elektrischer Energie zu Antriebszwecken, sondern ist als Mess-Stromabnehmer konzipiert. Dies bedeutet, dass der Mess-Stromabnehmer die dynamischen Lasten im Kontaktbereich zwischen Stromabnehmer und Fahrdraht in Analogie zu den Gegebenheiten bei realen Stromabnehmern nachbildet. Die auf dem Lichtschnittverfahren beruhende Einrichtung ermittelt in einem Messbereich (6) mittels Schnittebenen (7) über einen Sensor (3) fortlaufend den Abstand (5) des Messobjektes (4) zu Bauwerken und Tunneln, sowie die Neigungen von Seitenhaltern und Stützrohren. Es erkennt das Vorliegen einer Abweichung von einem Richtwert und meldet das Ereignis. Gleichzeitig wird das Ereignis mit den zugehörigen Bildern und der Verortung mittels Odometer und/oder dGPS abgespeichert.
Zusätzlich verfügt das Prüffahrzeug über eine digitale Kamera, welche auf den Bereich des Stromabnehmers plus kritischem Bereich um diesen (Abstand zum Bauwerk) ausgerichtet ist. Diese Kamera wird vom Rechner geschaltet, sobald dieser eine Unterschreitung des Mindestabstandes detektiert. Mit einer zweiten Kamera wird das zugehörige Bild der Strecke ergänzt. Auf diese Weise werden Bilder erzeugt, die eine Dokumentation sowie eine Auswertung durch einen menschlichen Bediener ermöglichen.
Die von der auf dem Lichtschnittverfahren beruhende Einrichtung aufbereiteten Daten werden an einen Rechner, bzw. Computer-Arbeitsplatz übertragen, an dem die Ergebnisse online visualisiert und zu Dokumentationszwecken gespeichert werden. Selbstverständlich kann diese Auswertung auch unter Einsatz der einschlägigen Speichermedien offline erfolgen.
Es ist ebenso selbstverständlich, dass derart erfasste Unterschreitungen eines Mindestabstandes mittels Kopplung an ein Wegmesssystem, z.B. auf Basis des GPS, verortet werden, damit sie für spätere Instandhaltungsmaßnahmen eindeutig identifizierbar sind.

## Patentansprüche

1. Verfahren zur Erfassung von Bauteilen in Oberleitungsanlagen von Schienenfahrzeugen, insbesondere von Eisenbahnfahrzeugen, wobei mindestens ein Laser mit einer Strahlformungsoptik und mindestens ein flächenhafter, ortsauflösender Sensor auf dem Dach des Schienenfahrzeuges zur Überwachung und Aufzeichnung von mit der Oberleitung in Verbindung stehender Bauteile verwendet wird und die Laserlinien quer zur Fahrtrichtung ausgerichtet werden,
***gekennzeichnet dadurch, dass***
• der (die) Sensor(en) (3) so ausgerichtet wird (werden), dass auf ihnen mit Hilfe einer Abbildungsoptik ein Bild der Teile der Oberleitungsanlage, die von der Laserlinie (den Laserlinien) ausgeleuchtet werden, entsteht,
• wobei zur Verbesserung der Nutzinformation Spektralfilter (Transmissionsmaximum bei der Laserwellenlänge) vor der Abbildungsoptik eingesetzt werden, die den Einfluss von Fremdbeleuchtung auf die detektierte Szene reduzieren und Umlenkelemente (wie Spiegeln oder Prismen) eingesetzt werden, die es erlauben, den vom Licht zurückgelegten Weg zwischen dem Laser (den Lasern) und den Auftreffpunkten an den Teilen der Oberleitung zu verändern,
• wonach die Ausgangssignale einer auf dem an sich bekannten Lichtschnittverfahren beruhenden Einrichtung in einer Auswertungs- und Steuerungseinrichtung zusammengeführt und verarbeitet werden,
• sodass eine Auswertung die Abstandsmesswerte (5) von im Messbereich (6) der Einrichtung befindlichen Objekten (4) oberhalb des Fahrzeugdaches in Relation zum Fahrzeugdach ermöglicht wird,
• wobei durch eine synchrone Aufzeichnung von Messwerten (z.B. Neigungssensoren) die Orientierung des Fahrzeugdaches ermittelt und die berechneten Abstandswerte (5) auf ein weiteres Bezugssystem zum Ausgleich von Wankbewegungen umgerechnet werden und
• dass mit Hilfe des Lichtschnittverfahrens das Kettenwerk und die damit verbundenen Bauteile einerseits und die Bauwerke und Tunnel andererseits auf Höhe des Stromabnehmers (2) erfasst wird und
• parallel das Profil des Stromabnehmers (2) abhängig von der Fahrdrahthöhe virtuell eingerechnet wird sowie
• der Abstand von den Bauteilen des Kettenwerkes oder einem virtuell ergänzten Stromabnehmer während der Messfahrt permanent gemessen, bzw. errechnet wird, sodass
• bei einer Unterschreitung des zulässigen Abstandes, dieses Ereignis ortsgenau angezeigt und aufgezeichnet und eine Verortung mittels Odometer und/oder dGPS durchgeführt wird.

2. Verfahren nach Anspruch 1, ***gekennzeichnet dadurch, dass*** beim Einsatz von mehreren Lasern zeitlich gemultiplexte Einschaltsequenzen der Laser verwendet werden.

3. Verfahren nach Anspruch 1, ***gekennzeichnet dadurch, dass*** als Strahlformungsoptik eine Linienoptik, vorzugsweise eine Zylinderlinse und/oder eine Powell-Linse und als flächenhafter, ortsauflösender Sensor vorzugsweise ein CCD-Sensor in einer Videokamera verwendet wird.

4. Verfahren nach Anspruch 1, ***gekennzeichnet dadurch, dass*** die Abstandsmesswerte (5) bzw. der zulässige Abstand in einem Bereich von min. 15 cm bis max. 50 cm kalibriert werden.

5. Verfahren nach Anspruch 1 bis 4, ***gekennzeichnet dadurch, dass*** als Messbereich eine Breite von min. 1,10 m mittig über dem Gleis und eine Höhe von min. 4,95 m bis max. 6,40 m eingerichtet wird.

6. Verfahren nach Anspruch 1, ***gekennzeichnet dadurch, dass*** als Spektralfilter ein Interferenzfilter mit maximaler Transmission bzgl. der Wellenlänge des Lasers verwendet wird.

7. Verfahren nach Anspruch 1, ***gekennzeichnet dadurch, dass***
auf dem Dach und/oder auf dem Führerstand des Instandhaltungsfahrzeuges eine Kamera zur optischen Erfassung der Annäherungszone zwischen den aktiven Teilen und den Bauwerken und Tunneln montiert wird, die von der Steuerungsvorrichtung in Abhängigkeit vom Ergebnis zur Aufnahme von Kontrollbildern ein- bzw. abgeschaltet wird, sodass auf diese Weise messtechnisch erfasste Ereignisse in dieser Zone dokumentiert und einer Auswertung zugänglich gemacht werden.

8. Verfahren nach Anspruch 1, ***gekennzeichnet dadurch, dass*** synchron mit dem Prüfsystem zur Erfassung kritischer Zustände ein Wegmesssystem (Odometer) und/oder ein GPS-gestütztes Verortungssystem eingesetzt wird, so dass die kritischen Stellen im Verlauf der Oberleitung mit einem Ortsstempel versehen werden.

9. Verfahren nach Anspruch 1, ***gekennzeichnet dadurch, dass*** ein Protokoll von jeder Prüffahrt erzeugt wird, in dem alle kritischen Stellen mit der Ortsangabe aufgelistet sind, wobei zu jedem Protokollpunkt die zugehörigen Bilder aus der Sicht der Stromabnehmer- und der Streckenkamera ergänzt wird.
